# EUROPÄISCHE PATENTSCHRIFT

(11) **EP 2 243 752 B1**
(45) Veröffentlichungstag und Bekanntmachung des Hinweises auf die Patenterteilung: **25.04.2012**
(21) Anmeldenummer: 09013739.9
(22) Anmeldetag: 02.11.2009
(51) Int. Cl.: C03C 17/30, C03C 17/42, H05B 6/12

(54) **Kratzfeste Silikonbeschichtung für Kochflächen aus Glas oder Glaskeramik**
Scratchproof silicone coating for cooking plates made of glass or glass ceramics
Revêtement de silicone résistant aux éraflures pour surfaces de cuisson en verre ou vitrocéramique

(30) Priorität: 21.11.2008 DE 102008058318
(43) Veröffentlichungstag der Anmeldung: 27.10.2010
(73) Patentinhaber: Schott AG, 55122 Mainz (DE)
(72) Erfinder: Striegler, Harald, 55437 Ockenheim (DE)
(74) Vertreter: Fleck, Hermann-Josef

(56) Entgegenhaltungen:
- EP-A2- 1 267 593
- WO-A2-2005/092810
- DE-A1- 2 431 695
- DE-A1-102004 014 684
- DATABASE WPI Week 200578 Thomson Scientific, London, GB; AN 2005-762417 XP002596843 & JP 2005 298266 A (NIPPON ELECTRIC GLASS CO) 27. Oktober 2005 (2005-10-27)

## Beschreibung

Die Erfindung betrifft ein Funktionselement, insbesondere eine Kochfläche oder eine Bedienblende mit einem flächigen Substrat bestehend aus Glas oder Glaskeramik, wobei auf das Substrat eine Beschichtung aufgebracht ist, die ein vernetztes Polysiloxan aufweist,

Derzeit können Kochflächen bei vertretbarem Aufwand in den verschiedensten Farben hergestellt werden, wenn als Substrat eine Platte aus farblosem Glas (z.B. Borofloat^{®}, Kalknatronglas) oder farbloser Glaskeramik verwendet wird, die unterseitig (auf der Seite, die dem Benutzer abgewandt ist) mit einer farbigen Beschichtung versehen wird. Als besonders vorteilhaft haben sich Beschichtungssysteme auf Siliconbasis erwiesen, weil mit ihnen die notwendige Dichtigkeit gegenüber Wärmeleitpaste und die notwendige Farbstabilität bei thermischer Belastung erreicht wird.

DE 35 03 576 C2, EP 1 267 593 B1, JP H10-273 342 und JP2005 038 622 nennen als Unterseitenbeschichtungen zweilagige Systeme, die aus einer pigmentierten Glasschicht als erster Lage (direkt auf der Substratunterseite) und einer Siliconschicht als zweiter Lage bestehen.

Diese Systeme haben - wie in JP2001 233 636 erwähnt - u.a. den Nachteil, dass die unterseitige Glasschicht die Substratfestigkeit erheblich erniedrigt.

In JP2001 233 636, JP2001 233 637, JP2001 213 642 und JP2003 086 337 wird daher vorgeschlagen, für die erste Lage u.a. Siliconharz als Bindemittel zu verwenden, darauf eine zweite Lage auf Basis von Glaskeramik, Aluminiumtitanat oder Edelmetallpräparaten aufzubringen und beide Lagen gleichzeitig bei über 800 °C einzubrennen. Bei dem Einbrand zersetzt sich das Silicon vollständig unter Bildung eines anorganischen Siliciumoxid-Netzwerks, dessen Bindung an das Substrat schwächer ist als bei den zuvor genannten glasbasierten Systemen, so dass die Festigkeit des Substrats nicht nennenswert herabgesetzt wird.

Um den aufwendigen Einbrennschritt einzusparen, mit dem die anorganische Schichten aus Glas, Aluminiumtitanat, Edelmetallen oder Glaskeramik bei hohen Temperaturen (700 - 850 °C) erhalten werden, wird in JP2003 086 337 auch ein System, das aus zwei Lagen eines hitzebeständigen Harzes besteht, erwähnt. Dabei enthält die erste Lage Effektpigmente. Damit die Effektpigmente ihre irisierende Wirkung entfalten können, wird eine zweite Lage, in der das hitzebeständige Harz schwarz pigmentiert ist, als blickdichte Hinterdruckung der ersten Lage aufgebracht. Beide Schichten werden bei nur 200 °C ausgehärtet.

Ferner sind einlagige Siliconschichtsysteme als Unterseitenbeschichtungen für Kochflächen bekannt:

DE 25 06 931 C3 nennt einen Lack auf Siliconbasis, der mit Aluminium, Eisenglimmer und schwarzen Farbstoffen versehen sein kann. Die Beschichtung dient allerdings nicht zur farblichen Gestaltung von Kochflächen, sondern zur Erhöhung der Wärmeleitfähigkeit der Kochfläche im infrarotbeheizten Heißbereich.

JP2005 298 266 nennt zur unterseitigen Beschichtung und farblichen Gestaltung von Kochflächen eine einlagige Beschichtung mit einem trifunktionalen Methylphenylpolysiloxan als Bindemittel. Der Einbrand der Beschichtung erfolgt bei 200 - 350 °C. Die Schichtdicke liegt bei 10 µm und niedriger. Aufgrund der dreidimensionalen Vernetzung des Silicons ist die Beschichtung dicht gegenüber Wärmeleitpaste.

US2005 214 521 A1 beschreibt einlagige Siliconbeschichtungen für Glas- und Glaskeramik-Kochflächen, die bei thermischer Belastung bis 700 °C farbstabil bleiben. Erreicht wird die Farbstabilität im Temperaturbereich 20 - 700 °C trotz Zersetzung des Silicons ab 400 °C angeblich dadurch, dass die eingesetzten Siliconharze weitgehend frei von organischen Gruppen sind.

Für den erfolgreichen Einsatz von Siliconbeschichtungen als farbgebende Unterseitenbeschichtungen auf Kochflächen sind neben der Farbstabilität und der Blickdichte Eigenschaften wie Dichtigkeit gegenüber Wärmeleitpaste, Haftfestigkeit und Kratzfestigkeit wichtig. Insbesondere eine hohe Kratzfestigkeit der unterseitigen Siliconbeschichtung ist entscheidend dafür, ob die Kochfläche unbeschädigt transportiert und montiert werden kann. Wenn die Kratzfestigkeit der Siliconbeschichtung hoch ist, kann die Anzahl fehlerhaft produzierter Platten verringert und die Montage der Kochflächen vereinfacht werden. Der dadurch geringere Ausschuss während der Fertigung und der Montage ermöglicht erhebliche Kosteneinsparungen.

Messungen der Kratzfestigkeit von kommerziell erhältlichen Kochflächen mit Siliconbeschichtung (ohne die o.g. zusätzliche Glas-, Glaskeramik-, Aluminiumtitanat- oder Edelmetallschicht) ergaben, dass bereits bei einer Belastung von 200 - 300 g eine abgerundete Hartmetallspitze (Radius: 500 µm) die Beschichtung durchdringt und aus Sicht des Benutzers ein Kratzer erkennbar ist. Dabei ist es unerheblich, ob die Siliconbeschichtung - wie oben beschrieben - aus zwei Lagen eines vernetzten Siliconharzes aufgebaut ist oder aus nur einer Lage eines unvernetzten, vernetzten oder pyrolisierten Siliconharzes besteht. Die Beschichtungen werden jeweils bei einer Belastung von 100 g, spätestens jedoch bei 300 g, von der Hartmetallspitze bis auf das Substrat entfernt.

Die Messung der Temperatur an der Unterseite von Kochflächen ergab, dass bei hochwertigen Induktions-Kochmulden, aber auch bei speziell konstruierten Gas-Kochgeräten, im normalen Gebrauch nur noch 150 - 250 °C und im ungünstigsten Fall (leerer Topf bei maximaler Heizleistung) 350 °C erreicht werden (im Gegensatz zu Kochmulden mit IR-Strahlungsheizelementen, bei denen bis über 600 °C erreicht werden). Die Temperaturregelung der Induktionskochmulden hängt dabei im wesentlichen von der Wirksamkeit der installierten elektronischen Schalt- und Regelkreise sowie der Position der Temperatursensoren unterhalb der Kochfläche ab (DE 10 2005 031 392 A1, DE 10 2006 023 704 A1, DE 196 46 826 C2). In US 3,742,174 werden mit ausgefeilter Technik sogar Kochflächen aus Kunststoff diskutiert.

Es ist Aufgabe der Erfindung, ein Funktionselement, insbesondere eine Kochfläche aus Glaskeramik oder Glas mit einem Beschichtungssystem bereitzustellen, das
- kratzfester als die kommerziell erhältlichen Siliconschichten ist
- bei Einbrenntemperaturen unter 500 °C erhalten werden kann
- ohne Farbveränderung Temperaturbelastungen bis 350 °C kurzzeitig und bis 250 °C dauerhaft standhält
- blickdicht ist
- undurchlässig gegenüber Wärmeleitpaste und Klebstoff ist
- ausreichend haftfest ist
- die Festigkeit des Substrats nicht herabsetzt

In ganz speziellen Fällen sollte das Beschichtungssystem geeignet für kapazitive Berührungsschalter sein. Ferner kann es in bestimmten Fällen vorteilhaft sein, wenn der Beschichtungsstoff
- strukturiert aufbringbar ist
- eine lange Verarbeitungszeit hat (8 Stunden und mehr)
- eine hohe Lagerstabilität hat (kein nennenswertes Absetzen der Pigmente u. Füllstoffe)

Die Aufgabe der Erfindung wird dadurch gelöst, dass auf die Beschichtung eine Deckschicht aufgebracht ist, die ein unvernetztes Polysiloxan aufweist.

Es wird mithin ein Siliconbeschichtungssystem verwendet, das aus zwei Lagen aufgebaut ist und dessen Beschichtung als erste, farbgebende Lage direkt auf der Unterseite des Substrats aus einem vernetzten Polysiloxan, Pigmenten und evtl. plättchenförmigen Füllstoffen besteht, und dessen Deckschicht als zweite Lage aus einem unvemetztem Polysiloxan besteht, das zusätzlich Talkum oder ein anderes Schichtsilicat enthalten kann.

Die einzelnen Lagen des Beschichtungssystems können durch Siebdruck, aber auch mit anderen Verfahren wie Sprühen, Tampondruck oder Stempelverfahren auf das Substrat aus Glas- oder Glaskeramik nacheinander aufgetragen werden. Dabei wird die Beschichtung (erste Lage) bei 200 - 500 °C zur Vernetzung des filmbildenden Siliconharzes eingebrannt, bevor die Deckschicht (zweite Lage) aufgebracht wird, die dann nur noch bei 20-180 °C getrocknet wird. Die Schichtdicke jeder Lage beträgt typischerweise 10-50 µm, insbesondere 15-30 µm. Die Gesamtschichtdicke des zweilagigen Systems sollte mindestens 20 µm betragen, damit eine Kratzfestigkeit von 500 g erreicht wird. Die Schichtdicke beträgt üblicherweise 25 - 65 µm, idealerweise 30 - 50 µm, um noch höhere Kratzfestigkeiten zu erreichen.

Durch ein solches Schichtsystem kann eine Hartmetallspitze (Radius 500 µm) selbst bei einer Belastung von 500 - 1000 g nicht bis auf das Substrat hindurchdringen. Die ausgezeichnete Kratzfestigkeit beruht auf der Kombination einer harten, ersten Schicht (vernetztes Polysiloxan) direkt auf dem Substrat mit einer weichen, wachsartigen zweiten Schicht als Deckschicht darüber. Die Hartmetallspitze (oder ein anderer kratzender, schabender Gegenstand) kann bei einem solchen Schichtsystem zwar in die äußere Deckschicht eindringen, gleitet dann aber selbst bei erheblichem Druck aufgrund der Zusammensetzung der Deckschicht aus wachsartigem Silicon und evtl. Schichtsilicaten über die durch Vernetzung gehärtete, farbgebende (erste) Schicht.

Zunächst wird die Zusammensetzung der farbgebenden Schicht beschrieben.

Als Siliconharz für die Beschichtung sind zur Schaffung einer farbgebenden Schicht feste oder flüssige Polysiloxane mit Methyl- oder Phenyl-Gruppen als organischen Resten und Hydroxy-, Alkoxy- oder Vinyl-Resten als funktionellen Gruppen (über die die thermische Vernetzung durch Einbrennen bei über 180 °C erfolgt) geeignet. Der Anteil funktioneller Gruppen sollte bei 1 - 10 Gew-% liegen, das Molekulargewicht sollte 1000 - 6000 g/mol betragen. Besonders farbstabile Beschichtungen ergeben hydroxyfunktionelle Phenylpolysiloxane mit einem Anteil von 2 - 5 Gew.-% Hydroxygruppen und einem Molekulargewicht von 1500 - 2000 g/mol. Der Anteil des Siliconharzes in der eingebrannten Beschichtung sollte bei 40 - 70 Gew.-%, besonders bevorzugt bei 50 - 60 Gew.-% liegen.

Um Farbstabilität bis 250 °C und kurzzeitig bis 350 °C zu erreichen, ist es notwendig, hochwertige anorganische Buntpigmente in der farbgebenden Beschichtung einzusetzen. Im Fall von Kochflächenbeschichtungen sollten die Pigmente aufgrund der gesetzlichen Bestimmungen für Elektro- und Elektronikgeräte kein Blei, sechswertiges Chrom (Cr^{+VI}) oder Cadmium enthalten. Geeignet sind anorganische Buntpigmente und Schwarzpigmente wie Eisenoxidpigmente, Chromoxidpigmente oder oxidische Mischphasenpigmente mit Rutil- oder Spinellstruktur und anorganische Weißpigmente (Oxide, Carbonate, Sulfide). Nicht geeignet ist Pigmentruß, weil er sich bei thermischer Belastung oberhalb 300 °C allmählich zersetzt. Als Beispiele für geeignete Pigmente seien die Eisenoxidrot-Pigmente aus Hämatit (α-Fe₂O₃), Eisenoxidschwarz-Pigmente mit der ungefähren Zusammensetzung Fe₃O₄ sowie die Mischphasenpigmente Cobaltblau CoAlO₄, Zinkeisenbraun (Zn,Fe)FeO₄, Chromeisenbraun (Fe,Cr)₂O₄, Eisenmanganschwarz (Fe,Mn)(Fe,Mn)₂O₄, Spinellschwarz Cu(Cr,Fe)₂O₄ und als Weißpigmente TiO₂ und ZrO₂ genannt.

Um spezielle Effekte bei der Farbgebung zu erzielen, können auch anorganische Glanzpigmente (Metalleffektpigmente, Perlglanzpigmente und Interferenzpigmente) eingesetzt werden.

Die meist plättchenförmigen Pigmente erhöhen ferner die mechanische Festigkeit der farbgebenden Schicht. Als Metalleffektpigmente sind plättchenförmige Teilchen aus Aluminium-, Kupfer- oder Kupfer-Zink-Legierungen geeignet, insbesondere wenn sie zur Steigerung der Farbstabilität bei thermischer Belastung mit z.B. Siliciumoxid gecoatet sind. Um die Dichtigkeit der Schicht gegenüber Wasser, Öl, Klebstoff u.a. Flüssigkeiten zu erhöhen, können aufschwimmende Typen (Leafing-Pigmente) eingesetzt werden. Als Perlglanzpigmente und Interferenzpigmente sind z.B. Glimmer, die mit TiO₂, SiO₂ oder Fe₂O₃ beschichtet sind, geeignet.

Der Teilchendurchmesser der Pigmente sollte kleiner als 20 µm sein (bevorzugt unter 10 µm), plättchenförmige Pigmente sollten Kantenlängen von weniger als 100 µm (bevorzugt unter 75 µm) haben, damit die Farbpaste mit üblichen Siebgewebeweiten (54-64, entsprechend einer Maschenweite von 115 µm oder 100-40, entsprechend einer Maschenweite von 57 µm) problemlos gedruckt werden kann. Der Pigmentanteil in der eingebrannten Beschichtung sollte bei 20 - 40 Gew.-%, besonders bevorzugt bei 24 - 36 Gew.-% liegen, damit bei den genannten Schichtdicken eine ausreichend blickdichte Beschichtung erzeugt werden kann.

Wie bereits erwähnt, erhöhen plättchenförmige Pigmente die mechanische Festigkeit der Beschichtung, d.h., sie verhindern die Bildung von Rissen in der Schicht oder schlimmstenfalls das Abplatzen der Schicht. Derselbe Effekt kann auch durch Zusatz nicht färbender, plättchenförmiger Füllstoffe erreicht werden, also z.B. durch Zusatz von Schichtsilicaten wie Glimmer, Kaolin oder Talkum. Der Anteil plättchenförmiger Füllstoffe in der eingebrannten Beschichtung kann 0 - 30 Gew.-% betragen, wobei geringere Anteile (0 - 15 Gew.-%) gewählt werden können, wenn die Beschichtung bereits plättchenförmige Pigmente enthält. Insbesondere bei Glaskeramik als Substrat sollte die Siliconschicht mechanisch verstärkt sein, damit eine ausreichende Haftfestigkeit erreicht wird.

Um aus dem Siliconharz, den Pigmenten und Füllstoffen eine Farbpaste zu erhalten, die für den Siebdruck geeignet ist, muss noch ein Lösungsmittel zugesetzt werden, in dem das Siliconharz gelöst sowie die Pigmente und Füllstoffe dispergiert werden können. Je nach Siliconharz sind aliphatische oder aromatische Kohlenwasserstoffe geeignet, bei hydroxyfunktionalen Phenylsiloxanen haben sich Ester bewährt. Speziell für Siebdruckanwendungen sollten hochsiedende Lösungsmittel (Verdunstungszahl > 35) eingesetzt werden, damit die Farbe nicht durch Verdunstung des Lösungsmittels schon im Sieb fest wird. Geeignet sind z.B. Methoxypropanol, 2-Butoxyethylacetat, Butylcarbitolacetat oder Butyldiglykol. Auf diese Weise können Verarbeitungszeiten von mehr als 8 Stunden erreicht werden.

Um die Benetzung des Glas- oder Glaskeramiksubstrats zu optimieren, können der Farbpaste Entschäumer, Netz- und Verlaufsmittel zugesetzt werden. Dem Absetzen der Pigmente und Füllstoffe während der Lagerung kann durch Zusatz von Verdickungsmitteln (z.B. Cellulosederivaten, Polyacrylaten, Polyetherpolyolen, Xanthan) oder Thixotropierungsmitteln (z.B. Schichtsilicaten, pyrogener Kieselsäure, Bentoniten) entgegengewirkt werden. Der Zusatz sollte sich aber auf wenige Gewichtsprozente (1 - 5 Gew.-%) beschränken, damit andere Eigenschaften wie z.B. die Haftfestigkeit nicht nachteilig beeinflußt werden. Die Viskosität der Siliconfarbe sollte für den Siebdruck im Bereich 1000 - 3000 mPa · s, bevorzugt bei 2000 - 2500 mPa · s (23 °C, Schergefälle 200 s⁻¹), liegen.

Die beschriebene Farbpaste wird z.B. durch Siebdruck mit einem Gewebe der Feinheit 54-64 auf das Glas oder die Glaskeramik vollflächig aufgebracht. Die farbgebende erste Lage (Beschichtung) kann aber auch teilweise ausgespart werden, z.B. im Bereich von Displayanzeigen und anderen Funktionsbereichen oder zur Erzeugung von Farbkontrasten durch Kombination mit der Deckschicht. Im Displaybereich (oder anderen Bereichen, z.B. als Kochzonenmarkierung) kann das Glas- oder Glaskeramiksubstrat auch bereits eine andere Beschichtung - z.B. aus einer Edelmetallbeschichtung wie in DE 10 2006 027 739 oder DE 10 2005 046 570 beschrieben - aufweisen.

Die Siebweite sollte 54-64 betragen, damit die erste Farblage ausreichend dick und damit blickdicht ist. Bei besonders hochgefüllten Lacken können aber auch feinere Gewebe (z.B. 100-40 oder 140-31) verwendet werden, solange die erhaltene Farbschicht noch blickdicht bleibt.

Nachdem die Farbe auf das Substrat aufgebracht wurde, muss die Beschichtung eingebrannt werden.

Um das Handling der beschichteten Glas- oder Glaskeramikplatten zu erleichtern und Schäden zu vermeiden, die an der frisch gedruckten ersten Farblage durch das Einbauen beschichteter Platten in den Einbrennofen entstehen können, empfiehlt es sich, als Siliconharz ein Festharz einzusetzen (Schmelz- oder Erweichungspunkt über 40 °C, insbesondere über 60 °C) und die Farbe vor dem Einbrand zu trocknen (beispielsweise 1 - 60 min bei 20 - 180 °C). Die Kratzfestigkeit der ersten Farblage ist gering und beträgt in diesem Stadium beispielsweise etwa nur 100 - 200 g.

In dem anschließenden Einbrand bei 200 - 500 °C (1 - 24 h, bevorzugt 1 - 4 Std.) vernetzt das Siliconharz unter Abspaltung der funktionellen Gruppen (Hydroxy-, Methoxy-Gruppen, etc.) und bildet eine dreidimensionale Netzwerkstruktur über hauptsächlich Si-O-Bindungen aus. Durch den Einbrand erhöht sich die mechanische Beständigkeit der Beschichtung, sie wird härter und läßt sich schwieriger verkratzen. (Die Kratzfestigkeit der eingebrannten Beschichtung beträgt 200 - 300 g.) Außerdem verändert sich aufgrund der chemischen Umwandlung des Siliconharzes der Farbton der Beschichtung geringfügig, so dass die farbgebende Schicht durch den Einbrand ihren endgültigen Farbton annimmt.

Bei sehr hohen Temperaturen (ab ca. 400 °C) beginnt das Siliconharz zu pyrolisieren, d.h., es zersetzt sich unter Abspaltung der organischen Reste (Phenyl-, Methylreste), wodurch die Porosität der Beschichtung je nach Pyrolysegrad beträchtlich zunehmen kann. Durch die Zersetzungsprodukte färbt sich die Beschichtung in der Regel braun.

Die pyrolytische Zersetzung des Siliconharzes während des Einbrands ist daher normalerweise nicht erwünscht. Es zeigte sich jedoch, dass durch die teilweise Pyrolyse der farbgebenden Siliconschicht (je nach Siliconharz 10 min bis 5 Std. Einbrand bei 400 - 500 °C) mögliche Farbveränderungen im späteren Gebrauch vorweggenommen werden können, so dass die teilweise pyrolisierte Schicht sich durch eine höhere Farbstabilität auszeichnet als Schichten, die lediglich vernetztes Siliconharz (beispielsweise 1 - 24 h Einbrand bei 200 - 350 °C) enthalten.

Die Erfindung sieht vor, dass auf die farbgebende Schicht eine weitere Lage einer Siliconharzschicht aufgebracht wird. Damit das Beschichtungssystem im späteren Gebrauch ausreichend farbstabil ist, muss die farbgebende Schicht (Beschichtung) blickdicht sein und darf von der Deckschicht (zweite Siliconlage) nicht vollkommen durchdrungen werden. Die Blickdichte und die Sperrwirkung gegenüber der Deckschicht wird durch die Schichtdicke, den oben genannten Pigmentanteil, evtl. den Anteil plättchenförmiger Bestandteile in der Beschichtung (erste Farblage) und/oder die Vernetzung des Siliconharzes bei 200 - 350 °C auch bei geringfügiger Pyrolyse (maximal 5 h bei 400 - 500 °C) sichergestellt. Wäre die erste Schicht nicht blickdicht oder würde sie aufgrund hoher Porosität von der zweiten Schicht durchdrungen, träte im Gebrauch der Kochfläche eine Farbveränderung ein, die für den Benutzer erkennbar wäre. Denn bei den Temperaturen, die im Gebrauch einer Kochfläche auftreten (250 °C, kurzzeitig 350 °C), vernetzt die Deckschicht allmählich und verändert dadurch etwas ihre Farbe.

An dieser Stelle sei angemerkt, dass sich die Kratzfestigkeit des Beschichtungssystems in denjenigen Bereichen der Kochfläche, die sich im Gebrauch auf über 250 °C erhitzen, allmählich erniedrigt, weil das Siliconharz in der Deckschicht allmählich vernetzt. Die Erniedrigung der Kratzfestigkeit stellt in diesem Fall aber keinen Nachteil mehr dar, da die Kratzfestigkeit im Wesentlichen beim Transport und der Montage erforderlich ist.

In dem Betrieb der Kochmulde spielt die Abriebbeständigkeit, also die Beständigkeit gegenüber scheuernden Einwirkungen, eine stärkere Rolle (scheuem können z.B. die Glimmerplatten, die zur thermischen Isolierung der Induktionsspulen zwischen der Kochflächenunterseite und den Spulen angebracht sind oder die Thermosensoren, die zur Temperaturkontrolle an die Kochflächenunterseite reichen). Sowohl bei unvernetztem, als auch bei vernetztem Siliconharz in der Deckschicht ist eine ausreichende Abriebbeständigkeit auf jeden Fall durch die Schichtdicke von mindestens 20 µm gegeben.

Im Folgenden wird die Zusammensetzung der Deckschicht beschrieben.

Als Siliconharz für die Deckschicht sind unter anderem dieselben Filmbildner wie für die farbgebende Schicht geeignet (Methyl- oder Phenyl-Polysiloxane mit Hydroxy-, Alkoxy- oder Vinyl-Resten als funktionellen Gruppen), sofern es sich um Harze handelt, die bei 20 - 40 °C fest sind (Festharze, ihr Erweichungs- oder Schmelzpunkt sollte über 40 °C, insbesondere über 60 °C liegen). Auf diese Weise ist sichergestellt, dass die Deckschicht nach der Trocknung fest (und nicht flüssig) ist. Denn da die Deckschicht im Fertigungsprozess nicht vernetzt wird, eignet sich ein Festharz, damit die farbig beschichteten Platten handhabbar sind. Die Deckschicht muss keine Pigmentierung aufweisen, wenn sie keine farbgebende Funktion erfüllen soll.

Die Deckschicht kann Talkum, Kaolin oder ein anderes Schichtsilicat (z.B. Glimmer) enthalten. Das Schichtsilicat in der Deckschicht steigert die Kratzfestigkeit des Schichtsystems weiter, weil die Deckschicht neben dem wachsartigen, unvernetzten Siliconharz dann auch noch einen schmierigen Füllstoff enthält. Durch die Kombination der harten farbgebenden Schicht mit der wachsartigen Deckschicht entsteht ein Schichtsystem, dass sich durch eine hohe Kratzfestigkeit auszeichnet, weil harte Gegenstände nach dem Eindringen in die Deckschicht aufgrund ihrer wachsartigen Konsistenz über die darunterliegende, farbgebende Schicht gleiten, ohne diese zu durchstoßen. Harte Gegenstände, die bei der Produktion, dem Transport oder der Montage in Kontakt mit der Kochflächenbeschichtung kommen, vermögen daher das Schichtsystem nicht oder erst bei deutlich höherer Belastung zu durchdringen.

Eine weitere Funktion des Schichtsilicats ist es, die Deckschicht, die durch den Gebrauch der Kochfläche im Heißbereich allmählich aushärtet, weil das Siliconharz bei den Gebrauchstemperaturen vernetzt, mechanisch zu verstärken. Denn das reine Siliconharz (insbesondere, wenn es sich um ein Phenylsiloxan handelt) könnte aufgrund der hohen thermischen Ausdehnung im vernetzten, spröden Zustand von der farbgebenden Schicht abplatzen. Ob der Zusatz von Schichtsilicaten notwendig ist, muss für jeden Harztyp durch Versuche bestimmt werden.

Die maximale Größe der Schichtsilicat-Teilchen sollte bei 10 - 30 µm liegen, die mittlere Teilchengröße sollte 1 - 20 µm betragen. Ideal sind feine Talkum-Typen mit einer maximalen Teilchengröße von 15 µm (D98) und einer mittleren Teilchengröße von 1 - 10 µm (D50). Der Anteil an Schichtsilicaten, insbesondere Talkum, in der getrockneten Schicht kann maximal 50 Gew.-%, insbesondere 10 - 25 Gew.-% betragen. Außer Schichtsilicaten können auch andere Festschmierstoffe wie Graphit oder Bornitrid zugesetzt werden, um die Kratzfestigkeit zu erhöhen.

Als Lösungsmittel können die bereits genannten Substanzen verwendet werden, ferner können der Verlauf und die Lagerstabilität durch Additive (Netz-, Dispergiermittel, Thixotropiermittel etc.) optimiert werden. Die Viskosität einer Siliconfarbe für den Siebdruck sollte im Bereich 1000 - 3000 mPa · s, bevorzugt bei 2000 - 2500 mPa · s (23 °C, Schergefälle 200 s⁻¹), liegen.

In besonderen Fällen kann die Zusammensetzung der Deckschicht identisch mit der Zusammensetzung der Beschichtung (farbgebende Schicht) sein. Für diese Variante sprechen vor allem logistische und fertigungstechnische Gründe (es muss nur eine Farbe bevorratet werden und in der Fertigung ist eine Verwechslung der Farben ausgeschlossen).

Wachse (Paraffin, Carnauba-Wachs, Polyethylene) als Filmbildner für die Deckschicht würden die Kratzfestigkeit ebenfalls erhöhen, sind aber dennoch ungeeignet, da sie nicht die thermische Stabilität der Polysiloxane erreichen (Die Zersetzung der Wachse findet unter starker Rauchentwicklung ab 150 °C statt).

Wenn die unterseitig beschichtete Kochfläche für kapazitiv arbeitende Berührungsschalter (z.B. Touch-Control-Einheiten der Firma E.G.O.) geeignet sein soll, ist es erforderlich, dass das zweilagige Silicon-Schichtsystem elektrisch nicht leitfähig ist, d.h., dass der elektrische Flächenwiderstand der Unterseitenbeschichtung im Mega-, besser im Giga-Ohm-Bereich (bei über 10⁹ Ω/Quadrat) liegen muss. Erreicht wird die Eigenschaft dadurch, dass keine elektrisch leitfähigen Pigmente (z.B. Metallpulver, Aluminiumflakes) oder Füllstoffe (Graphit) in der farbgebenden Schicht oder in der Deckschicht verwendet werden oder dass zumindest der Anteil der elektrisch leitfähigen Stoffe in der Beschichtung auf eine so geringe Menge begrenzt wird, dass ein ausreichend hoher Flächenwiderstand sichergestellt ist. Die elektrische Leitfähigkeit der Beschichtung kann bei Verwendung von Aluminiumflakes oder anderen elektrisch leitfähigen Pigmenten auch dadurch unterbunden werden, dass die Pigmente mit einer elektrisch nicht leitenden Schicht umgeben werden (z.B. mit Siliciumoxid gecoatete Aluminiumflakes).

Die Deckschicht kann mit denselben Verfahren (Siebdruck, Sprühen, Tampondruck, Stempelverfahren) wie die farbgebende Schicht aufgebracht werden. Bei dem Siebdruck, der wegen der Möglichkeit zum einfachen Aufbringen von Strukturen bevorzugt wird, haben sich Gewebe der Feinheit 54-64 und 100-40 bewährt.

Als Substratmaterial für das Beschichtungssystem eignen sich z.B. Glaskeramiken vom Typ Li₂O-Al₂O-SiO₂, insbesondere farblose Glaskeramik mit einer thermischen Ausdehnung von -10 · 10⁻⁷ K⁻¹ bis +30 · 10⁻⁷ K⁻¹ in dem Temperaturbereich 30 - 500 °C, deren bekannte Zusammensetzung u.a. in der nachstehenden Tabelle 1 angegeben ist:

**Tab. 1 Zusammensetzung geeigneter Glaskeramik-Substrate**

| Elementoxid | Glaskeramik-Zusammensetzung [Gew.-%] | | |
|---|---|---|---|
| SiO₂ | 66 - 70 | 50 - 80 | 55 - 69 |
| Al₂O₃ | > 19,8-23 | 12 - 30 | 19 - 25 |
| Li₂O | 3 - 4 | 1 - 6 | 3 - 4,5 |
| MgO | 0 - 1,5 | 0 - 5 | 0 - 2,0 |
| ZnO | 1 - 2,2 | 0 - 5 | 0 - 2,5 |
| BaO | 0 - 2,5 | 0 - 8 | 0 - 2,5 |
| Na₂O | 0 - 1 | 0-5 | 0 - 1,5 |
| K₂O | 0 - 0,6 | 0-5 | 0 - 1,5 |
| TiO₂ | 2 - 3 | 0-8 | 1 - 3 |
| ZrO₂ | 0,5 - 2 | 0 - 7 | 1 - 2,5 |
| P₂O₅ | 0-1 | 0 - 7 | - |
| Sb₂O₃ | übliche Mengen | 0 - 4 | übliche Mengen |
| As₂O₃ | übliche Mengen | 0 - 2 | übliche Mengen |
| CaO | 0 - 0,5 | 0 | 0 - 1,5 |
| SrO | 0 - 1 | 0 | 0 - 1,5 |
| Nd₂O₃ | - | - | 0,004 - 0,4 |
| B₂O₃ | - | - | 0 - 1 |
| SnO₂ | - | - | 0 - 0,4 |
| Quelle | EP 1 170 264 B1 | JP (A) 2004-193050 | EP 1 837 314 A1 |
| | Ansprüche 14 - 18 | | |

Geeignet sind auch gewalzte oder gefloatete Glasplatten aus Alumosilicat-Glas, aus Kalk-Natron-Glas, aus Borosilicat-Glas oder aus Erdalkali-Silikat-Glas, insbesondere, wenn die Platten chemisch oder thermisch (wie z.B. in EP 1 414 762 B1 beschrieben) vorgespannt sind.

Das erfindungsgemäße Beschichtungssystem ist neben der Anwendung für Kochflächen auch für Bedienblenden oder andere Anwendungen, bei denen Glas- oder Glaskeramikplatten thermisch belastet werden, geeignet.

### Ausführungsbeispiele

### Beispiel 1: Kratzfeste, hellgraue Siliconbeschichtung mit Metallic-Effekt

Eine beidseitig glatte, farblose Glaskeramikplatte (ca. 60 cm breit, 80 cm lang und 4 mm dick) mit der Zusammensetzung gemäß EP 1 837 314 A1 (Tab.1, rechte Spalte) wurde oberseitig mit einer keramischen Dekorfarbe gemäß DE 197 21 737 C1 in einem Punktraster beschichtet und keramisiert.

Anschließend wurde auf die Unterseite der keramisierten Glaskeramikplatte eine Siliconfarbe mit der Zusammensetzung (A) gemäß Tabelle 2 durch Siebdruck (Siebgewebe 54-64) vollflächig aufgebracht. Die Viskosität der Siliconfarbe betrug 2100 mPa · s (23 °C, Schergefälle 200 s⁻¹).

**Tab. 2: Farbzusammensetzungen**

| Farbkomponente | Zusammensetzung in Gew.-% | | |
|---|---|---|---|
| | A (hellgrau) | B (dunkelgrau) | C (schwarz) |
| Phenylpolysiloxan SILRES IC 836*¹⁾ (Wacker) | 36,9 % | 41,5 % | 42,0 % |
| Bayferrox 303 T (Bayer) | 12,5 % | 16,9 % | 20,0 % |
| Aluminiumpulver Spezial PCR 501 (Eckart-Werke) | 12,5 % | 6,6 % | 0,0 % |
| Finntalc M05N (D50 = 6,8 µm) (Mondo Minerals) | 8,3 % | 8,7 % | 0,0 % |
| MicroTalc AT EXTRA (D50 = 2,5 µm) (Mondo Minerals) | 0,0 % | 0,0 % | 20 % |
| Mittel S (Schwegmann) | 0,5 % | 0,5 % | 0,5 % |
| Butylcarbitolacetat (Merck) | 29,3 % | 25,8 % | 17,5 % |

| | | | |
|---|---|---|---|
| *¹⁾ mittleres Molekulargewicht : ca. 1700 g/mol; Hydroxygruppen: 3 - 4,5 Gew.-% | | | |

Die Beschichtung wurde 1 Std. bei 150 °C getrocknet und anschließend 4 h bei 450 °C eingebrannt (Erhitzen und Abkühlen erfolgte mit 3 K/min). Auf die eingebrannte Beschichtung wurde eine weitere Lage der Rezeptur (A) vollflächig gedruckt (Siebgewebe 54-64) und getrocknet (1 Std. bei 150 °C).

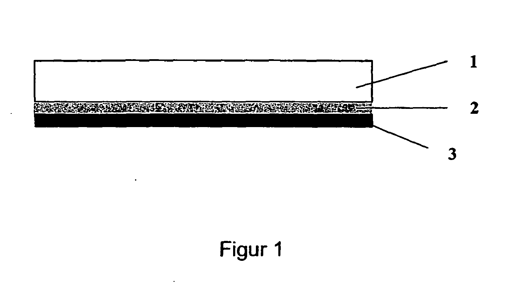

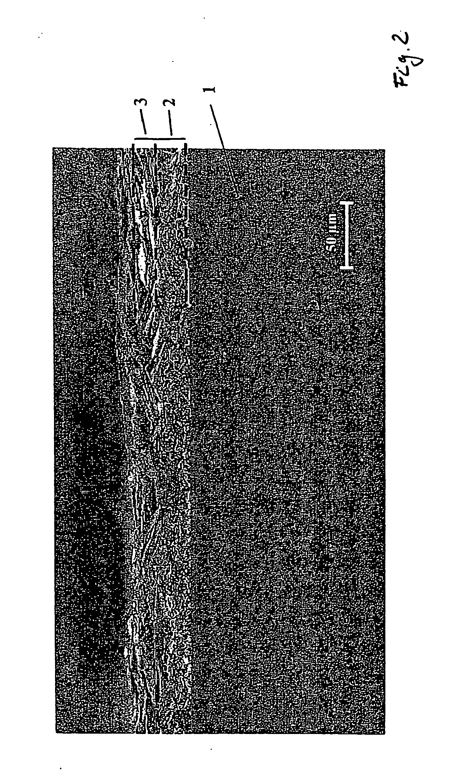

Die Schichtdicke des zweilagigen Systems betrug 40 - 45 µm. Fig. 2 (elektronenmikroskopische Aufnahme) zeigt einen Querschnitt durch das Beschichtungssystem auf dem Glaskeramik-Substrat, wobei die beiden Lagen aufgrund der unterschiedlichen Verdichtung beim Einbrand bzw. der Trocknung gut unterschieden werden können.

Die Kratzfestigkeit des unterseitig aufgedruckten Systems war extrem hoch. Die abgerundete Hartmetallspitze (Radius: 500 µm) konnte das Schichtsystem selbst bei einer Belastung von 1000 g nicht durchdringen. Bei der Betrachtung der geprüften Kochfläche von oben (aus der Sicht des Benutzers) war kein Schaden erkennbar.

Die Messung der Kratzfestigkeit wurde durchgeführt, indem die mit dem jeweiligen Gewicht (100 g, 200 g, ..., 1000 g) belastete Hartmetallspitze senkrecht auf die Beschichtung aufgesetzt und ca. 30 cm mit einer Geschwindigkeit von 20 - 30 cm/s über die Beschichtung bewegt wurde.

Die Bewertung der Blickdichtheit erfolgte bei praxisrelevanter Beleuchtung an der Glaskeramik-Kochfläche, die in eine Kochmulde eingebaut war. Da der Blick durch die eingebaute Kochfläche hindurch in das Innere der Kochmulde selbst bei geringstem Betrachtungsabstand (10 cm) nicht möglich war, ist die Unterseitenbeschichtung blickdicht. Die spektrale Transmission der unterseitig beschichteten Glaskeramik liegt im sichtbaren Bereich bei τᵥᵢₛ ≤ 1 % (bestimmt nach DIN EN 410 bei Lichtart D65).

Die Beständigkeit gegenüber Speiseöl, Wärmeleitpaste und Klebstoff wurde geprüft, indem auf das Beschichtungssystem ein Tropfen (ca. 0,1 g verteilt auf 9 cm²) dieser Substanzen gegeben wurde und die Farbveränderung nach 24 Std. bei 20 °C und nach 1 Std. Einbrand bei 350 °C beurteilt wurde. Da in beiden Fällen aus Benutzersicht keine Farbveränderung erkennbar war, ist das Beschichtungssytem gegenüber den Substanzen farbstabil.

Die Temperaturbeständigkeit wurde ferner überprüft, indem die beschichtete Glaskeramik-Kochfläche 80 Std. auf 350 °C erhitzt und anschließend die Farbtonveränderung und die Biegefestigkeit der beschichteten Glaskeramik sowie die Haftfestigkeit der Unterseitenbeschichtung geprüft wurde.

Die Farbwerte vor und nach der thermischen Behandlung sind in Tab.3 aufgeführt. Sie wurden mit einem Spektralphotometer (Mercury 2000, Fa. Datacolor) aus Sicht des Benutzers, d.h., durch das Substrat hindurch gemessen (Lichtart: D65, Beobachtungswinkel: 10°). Die Angabe der Farbwerte erfolgt nach dem CIELAB-System (DIN 5033, Teil 3 "Farbmaßzahten"). Gemäß DIN 6174 betrug der Farbunterschied nur ΔE = 0,6, bei Prüfung mit dem normalsichtigen Auge war kein Farbunterschied erkennbar.

**Tab.3 Farbwerte "hellgrau" vor und nach thermischer Belastung**

| Probenzustand | Farbwerte | | | Farbunterschied ΔE |
|---|---|---|---|---|
| | L* | a* | b* | |
| Anlieferungszustand | 59,2 | -0,54 | 3,17 | --- |
| nach 300 Std. 200 °C | 58,7 | -0,50 | 3,53 | 0,6 (nicht erkennbar) |
| nach 80 Std. 350 °C | 58,8 | -0,33 | 3,57 | |
| nach 10 Std. 450 °C | 58,1 | -0,19 | 4,21 | 1,6 (Gelbfärbung) |
| nach 4 Std. 500 °C | 58,5 | -0,20 | 5,20 | 2,2 (Braunfärbung) |
| nach 4 Std. 550 °C | 58,2 | -0,10 | 5,40 | 2,5 (Braunfärbung) |

Bei stärkerer thermischer Belastung (z.B. 1 Std. 450 °C) tritt eine geringfügige Aufhellung der Beschichtung ein, die mit dem normalsichtigen Auge nur aus einem bestimmten Betrachtungswinkel unter bestimmten Lichtverhältnissen erkannt werden kann (besonders gut im direkten Sonnenlicht bei einem Betrachtungswinkel von ca. 30 ° aus der Richtung der auftreffenden Sonnenstrahlen). Die Farbveränderung der Beschichtung ist umso stärker, je länger die thermische Belastung andauert und je höher die Temperatur ist. So wurde z.B. bei einer Belastung von 10 Std. 450 °C eine Farbveränderung (Gelbfärbung) erzeugt, die mit dem normalsichtigen Auge gut erkennbar ist. Der Farbunterschied betrug nach einer derartigen Belastung ΔE = 1,6 (DIN 6174). Für Kochflächen, die sich auf der Unterseite auf über 350 °C erhitzen, ist das Siliconsystem daher nicht geeignet.

Die Biegefestigkeit der Glaskeramik-Kochfläche lag vor und nach der thermischen Belastung mit 175 MPa auf dem üblichen Niveau von über 110 MPa (Mittelwert, bestimmt nach DIN EN 1288-5). Eine Steigerung der Festigkeit durch die Siliconschicht wurde nicht beobachtet.

Die Haftfestigkeit war auch nach der thermischen Belastung ausreichend. Sie wurde mit dem "Tesa-Test" geprüft, wobei auf die Unterseitenbeschichtung ein Streifen transparenten Klebefilms angerieben und dann ruckartig abgerissen wird (Tesafilm Typ 104, Beiersdorf AG). An dem Klebestreifen blieben zwar einige Partikel aus der Deckschicht haften, die farbgebende Schicht wurde jedoch nicht vom Substrat abgelöst, so dass bei Betrachtung der Kochfläche aus Benutzersicht kein Schaden erkennbar war und die Haftfestigkeit als vollkommen ausreichend beurteilt wurde.

Ferner ist das Beschichtungssystem für kapazitive Berührungsschalter geeignet, weil hochwertige, gecoatete Aluminiumpigmente verwendet wurden. Die Funktion kapazitiver Touch-Sensoren im Bereich der grauen Siliconbeschichtung wurde mit einer Touch-Control-Einheit von E.G.O. überprüft. Über die Berührungsschalter konnten die Kochzonen problemlos angesteuert werden. Denn der elektrische Flächenwiderstand betrug über 20 GΩ / Quadrat.

Der Flächenwiderstand kann relativ einfach mit einem Ohmmeter bestimmt werden, indem die beiden Elektroden des Meßgeräts möglichst nahe beieinander (mit ca. 0,5 - 1 mm Abstand) auf die Beschichtung aufgesetzt werden. Der vom Meßgerät angezeigte Widerstand entspricht in etwa dem Flächenwiderstand der Beschichtung.

### Beispiel 2: Kratzfeste dunkelgraue Siliconbeschichtung

Auf die gleiche Weise wie in Beispiel 1 wurde eine Glaskeramikplatte mit Rezeptur (B) (Tab.2) beschichtet, d.h., zunächst wurde auf das Substrat eine Farblage der dunkelgrauen Rezeptur (B) gedruckt, getrocknet und eingebrannt (4 Std. 450 °C), und dann wurde als Deckschicht eine weitere Lage Rezeptur (B) aufgetragen, die nur noch getrocknet (1 Std. 150 °C) wurde. Erhalten wurde eine dunkelgraue Kochfläche mit Metallic-Effekt.

Die Schichtdicke des zweilagigen Systems betrug 32 - 37 µm, die Kratzfestigkeit lag bei über 1000 g. Das System ist blickdicht. Speiseöl, Wärmeleitpaste oder Klebstoff schlagen nicht durch (aus Benutzersicht keine Farbveränderung erkennbar).

Bei thermischer Belastung bis 350 °C ist das System farbstabil: Ein Farbunterschied nach einer Belastung von 80 Std. bei 350 °C war mit dem normalsichtigen Auge nicht erkennbar, gemäß DIN 6174 betrug der Farbunterschied nur ΔE = 0,2.

**Tab.4 Farbwerte "dunkelgrau" vor und nach thermischer Belastung**

| Probenzustand | Farbwerte | | |
|---|---|---|---|
| | L* | a* | b* |
| Anlieferungszustand | 45,1 | -0,1 | 2,3 |
| nach 80 Std. 350 °C | 45,2 | 0,0 | 2,4 |

Die Biegefestigkeit der dunkelgrau beschichteten Glaskeramik-Kochfläche lag vor und nach der thermischen Belastung mit 176 - 187 MPa auf dem üblichen Niveau von über 110 MPa (Mittelwert, bestimmt nach DIN EN 1288-5).

Auch die Haftfestigkeit war ausreichend (vergleichbar mit dem "hellgrauen" System). Das System ist für kapazitive Berührungsschalter geeignet, weil sein Flächenwiderstand über 20 GΩ / Quadrat beträgt.

### Beispiel 3: Kratzfeste hellgraue Siliconbeschichtung mit schwarzer Deckschicht

Auf die gleiche Weise wie in Beispiel 1 wurde eine Glaskeramikplatte zunächst mit Rezeptur (A) (Tab.2) beschichtet, d.h., zunächst wurde auf das Substrat eine Farblage der hellgrauen Rezeptur (A) gedruckt, getrocknet und eingebrannt (4 Std. 450 °C), und dann wurde als Deckschicht eine Lage der schwarzen Rezeptur (C) aufgetragen, die nur noch getrocknet (1 Std. 150 °C) wurde. Erhalten wurde eine aus Sicht des Benutzers hellgraue Kochfläche mit Metallic-Effekt.

Die Schichtdicke des zweilagigen Systems betrug 42 - 47 µm, die Kratzfestigkeit lag bei über 1000 g. Das System ist blickdicht. Speiseöl, Wärmeleitpaste oder Klebstoff schlagen nicht durch (aus Benutzersicht keine Farbveränderung erkennbar).

Bei thermischer Belastung bis 350 °C ist das System farbstabil: Ein Farbunterschied nach einer Belastung von 80 Std. bei 350 °C war mit dem normalsichtigen Auge nicht erkennbar, gemäß DIN 6174 betrug der Farbunterschied nur ΔE = 0,4.

**Tab.5 Farbwerte "hellgrau + schwarz" vor und nach thermischer Belastung**

| Probenzustand | Farbwerte | | |
|---|---|---|---|
| | L* | a* | b* |
| Anlieferungszustand | 58,8 | -0,54 | 3,24 |
| nach 80 Std. 350 °C | 59,1 | -0,37 | 3,46 |

Die Biegefestigkeit der beschichteten Glaskeramik-Kochfläche lag vor und nach der thermischen Belastung mit 173 MPa auf dem üblichen Niveau von über 110 MPa (Mittelwert, bestimmt nach DIN EN 1288-5).

Die Haftfestigkeit war noch ausreichend, weil aus Sicht des Benutzers keine Veränderung an der farbgebenden Schicht im geprüften Bereich erkennbar war. Die Haftfestigkeit war aber nach thermischer Belastung (80 h 350 °C) geringer als bei den beiden anderen Systemen aus Beispiel 1 und 2, denn die Deckschicht ließ sich nach der thermischen Belastung im Tesa-Test nahezu vollständig ablösen.

Das System ist für kapazitive Berührungsschalter geeignet, weil sein Flächenwiderstand über 20 GΩ / Quadrat beträgt.

### Gegenbeispiel 1: einlagige, hellgraue Siliconbeschichtunq mit geringer Kratzfestigkeit

Eine beidseitig glatte, farblose Glaskeramikplatte (ca. 60 cm breit, 80 cm lang und 4 mm dick) mit der Zusammensetzung gemäß EP 1 837 314 A1 (Tab.1, rechte Spalte) wurde oberseitig mit einer keramischen Dekorfarbe gemäß DE 197 21 737 C1 in einem Punktraster beschichtet und keramisiert.

Anschließend wurde auf die Unterseite der keramisierten Glaskeramikplatte eine Siliconfarbe mit der Zusammensetzung (A) gemäß Tabelle 2 durch Siebdruck (Siebgewebe 54-64) vollflächig aufgebracht. Die Beschichtung wurde bei 150 °C 45 min getrocknet.

Erhalten wurde eine hellgraue Glaskeramik-Kochfläche mit Metallic-Effekt. Die Schichtdicke der Siliconbeschichtung betrug 20 ± 2 µm. Die Kratzfestigkeit der unterseitig aufgebrachten Siliconschicht war sehr gering. Die abgerundete Hartmetallspitze (Radius: 500 µm) konnte das Schichtsystem bereits bei einer Belastung von 200 g vollständig durchdringen, so dass die Kratzspur aus Benutzersicht (Betrachtung der Kochfläche von oben) deutlich erkennbar war.

### Gegenbeispiel 2: einlagige, dunkelgraue Siliconbeschichtung mit geringer Kratzfestigkeit

Eine beidseitig glatte, farblose Glaskeramikplatte wurde wie in Gegenbeispiel 1 auf der Unterseite mit einer Siliconfarbe der Zusammensetzung (B) gemäß Tabelle 2 beschichtet. Die Beschichtung wurde bei 150 °C 45 min getrocknet.

Erhalten wurde eine dunkelgraue Glaskeramik-Kochfläche mit Metallic-Effekt. Die Schichtdicke der Siliconbeschichtung betrug 20 ± 2 µm. Die Kratzfestigkeit der unterseitig aufgebrachten Siliconschicht war sehr gering. Die abgerundete Hartmetallspitze (Radius: 500 µm) konnte das Schichtsystem bereits bei einer Belastung von 200 g vollständig durchdringen, so dass die Kratzspur aus Benutzersicht (Betrachtung der Kochfläche von oben) deutlich erkennbar war.

### Gegenbeispiel 3: einlagige, vernetzte Siliconbeschichtung mit geringer Kratzfestigkeit

Eine beidseitig glatte, farblose Glaskeramikplatte wurde wie in Gegenbeispiel 2 auf der Unterseite mit einer Siliconfarbe der Zusammensetzung (B) gemäß Tabelle 2 beschichtet. Die Beschichtung wurde bei 150 °C 45 min getrocknet und anschließend 4 Std. bei 450 °C eingebrannt.

Erhalten wurde eine dunkelgraue Glaskeramik-Kochfläche mit Metallic-Effekt. Die Schichtdicke der Siliconbeschichtung betrug 19 ± 2 µm. Die Kratzfestigkeit der unterseitig aufgebrachten Siliconschicht war sehr gering. Die abgerundete Hartmetallspitze (Radius: 500 µm) konnte das Schichtsystem bereits bei einer Belastung von 100 g vollständig durchdringen, so dass die Kratzspur aus Benutzersicht (Betrachtung der Kochfläche von oben) deutlich erkennbar war.

### Gegenbeispiel 4: zweilagige, dunkelgraue Siliconbeschichtung mit geringer Kratzfestigkeit

Eine beidseitig glatte, farblose Glaskeramikplatte wurde wie in Gegenbeispiel 2 zunächst auf der Unterseite mit einer Siliconfarbe der Zusammensetzung (B) gemäß Tabelle 2 beschichtet. Die Beschichtung wurde bei 150 °C 45 min getrocknet und anschließend 4 Std. bei 450 °C eingebrannt.

Auf die eingebrannte Beschichtung wurde dann eine weitere Lage der Rezeptur (B) vollflächig gedruckt (Siebgewebe 54-64), ebenfalls bei 150 °C 45 min getrocknet und anschließend 4 Std. bei 450 °C eingebrannt. Die Schichtdicke des Systems aus den zwei ausgehärteten (vernetzten) Siliconschichten lag bei 32 - 37 µm.

Die Kratzfestigkeit dieses Systems war extrem gering. Die abgerundete Hartmetallspitze (Radius: 500 µm) konnte das Schichtsystem bereits bei einer Belastung von 200 g durchdringen, so dass die Kratzspur bei Betrachtung der geprüften Kochfläche von oben (aus der Sicht des Benutzers) deutlich erkennbar war.

In der Zeichnung ist schematisch ein Ausführungsbeispiel der Erfindung in Seitenansicht gezeigt. Wie diese Darstellung erkennen lässt, ist unmittelbar auf die Unterseite eines Substrates 1 aus Glas- oder Glaskeramik eine Beschichtung 2 aus vernetztem Polysiloxan aufgebracht. Die Beschichtung 2 ist mit einer Deckschicht 3 aus unvernetzten Polysiloxan überdeckt.

## Patentansprüche

1. Funktionselement, insbesondere Kochfläche oder Bedienblende mit einem flächigen Substrat (1) bestehend aus Glas oder Glaskeramik, wobei auf das Substrat eine Beschichtung (2) aufgebracht ist, die ein vernetztes Polysiloxan aufweist,
**dadurch gekennzeichnet,**
**dass** auf die Beschichtung (2) eine Deckschicht (3) aufgebracht ist, die ein unvernetztes Polysiloxan aufweist.

2. Funktionselement nach Anspruch 1,
**dadurch gekennzeichnet,**
**dass** die Schichtdicke der Beschichtung (2) und/oder der Deckschicht (3) im Bereich zwischen 10 bis 50 µm beträgt.

3. Funktionselement nach Anspruch 2,
**dadurch gekennzeichnet,**
**dass** die Schichtdicke der Beschichtung (2) und/oder der Deckschicht (3) im Bereich zwischen 15 bis 30 µm beträgt.

4. Funktionselement nach einem der Ansprüche 1 bis 3,
**dadurch gekennzeichnet,**
**dass** die aus der Schichtdicke der Beschichtung (2) und der Deckschicht (3) summierte Gesamt-Schichtdicke mindestens 20 µm beträgt.

5. Funktionselement nach Anspruch 4,
**dadurch gekennzeichnet,**
**dass** die Gesamt-Schichtdicke im Bereich zwischen 25 bis 65 µm, vorzugsweise im Bereich zwischen 30 bis 50 µm beträgt.

6. Funktionselement nach einem der Ansprüche 1 bis 5,
**dadurch gekennzeichnet,**
**dass** das Beschichtungsmaterial für die Beschichtung (2) als Siliconharz feste oder flüssige Polysiloxane mit Methyl- oder Phenyl-Gruppen als organische Reste und Hydroxy, Alkoxy oder Vinyl-Resten als funktionelle Gruppen aufweist.

7. Funktionselement nach Anspruch 6,
**dadurch gekennzeichnet,**
**dass** der Anteil der funktionellen Gruppen 1 bis 10 Gew.-% beträgt und/oder dass deren Molekulargewicht 1000 bis 6000 g/mol beträgt.

8. Funktionselement nach Anspruch 6 oder Anspruch 7,
**dadurch gekennzeichnet,**
**dass** das Beschichtungsmaterial für die Beschichtung (2) hydroxy-funktionelle Phenylpolysiloxane mit einem Anteil von 2 bis 5 Gew.-% Hydroxygruppen und einem Molekulargewicht von 1500 bis 2000 g/mol aufweisen.

9. Funktionselement nach einem der Ansprüche 1 bis 8,
**dadurch gekennzeichnet,**
**dass** der Anteil des Siliconharzes in der vernetzten Beschichtung im Bereich zwischen 40 bis 70 Gew.-%, vorzugsweise im Bereich zwischen 50 bis 60 Gew.-%, liegt.

10. Funktionselement nach einem der Ansprüche 1 bis 9,
**dadurch gekennzeichnet,**
**dass** die Beschichtung (2) anorganische Buntpigmente, Weißpigmente und/oder Schwarzpigmente enthält.

11. Funktionselement nach Anspruch 10,
**dadurch gekennzeichnet,**
**dass** die Beschichtung (2) Eisenoxidrot-Pigmente, bestehend aus Hamätit, Eisenoxidschwarz-Pigmente, Mischphasenpigmente, Zinkeisenbraun, Chromeisenbraun, Eisenmanganschwarz, Spinellschwarz, TiO₂ und/oder ZrO₂ aufweist.

12. Funktionselement nach einem der Ansprüche 1 bis 10,
**dadurch gekennzeichnet,**
**dass** die Beschichtung anorganische Glanzpigmente aufweist.

13. Funktionselement nach Anspruch 12,
**dadurch gekennzeichnet,**
**dass** die anorganischen Glanzpigmente als gecoatete und/oder ungecoatete plättchenförmige Pigmentteile ausgebildet sind.

14. Funktionselement nach einem der Ansprüche 10 bis 13,
**dadurch gekennzeichnet,**
**dass** die anorganischen Buntpigmente, Schwarzpigmente und/oder Weißpigmente einen Teilchendurchmesser kleiner als 20 µm, vorzugsweise kleiner als 10 µm, aufweisen.

15. Funktionselement nach einem der Ansprüche 1 bis 13,
**dadurch gekennzeichnet,**
**dass** bei Verwendung von plättchenfömigen Glanzpigmenten diese eine Kantenlänge ≤ 100 µm, vorzugsweise ≤ 75 µm, aufweisen.

16. Funktionselement nach einem der Ansprüche 1 bis 15,
**dadurch gekennzeichnet,**
**dass** der Anteil an Bunt- und/oder Schwarzpigmenten und/oder Weißpigmenten in der vernetzten Beschichtung (2) im Bereich zwischen 20 bis 40 Gew.-%, vorzugsweise im Bereich zwischen 24 bis 36 Gew.-%, liegt.

17. Funktionselement nach einem der Ansprüche 1 bis 16,
**dadurch gekennzeichnet,**
**dass** die Beschichtung (2) und/oder die Deckschicht (3) plättchenförmige Füllstoffe aufweist.

18. Funktionselement nach Anspruch 17,
**dadurch gekennzeichnet,**
**dass** die Füllstoffe aus Schichtsilicat, beispielsweise Glimmer, Kaolin und/oder Talkum bestehen.

19. Funktionselement nach Anspruch 17 oder 18,
**dadurch gekennzeichnet,**
**dass** der Anteil der Füllstoffe in der vernetzten Beschichtung (2) im Bereich > 0 bis 30 Gew.-%, vorzugsweise > 0 bis 15 Gew.-%, beträgt.

20. Funktionselement nach Anspruch 18,
**dadurch gekennzeichnet,**
**dass** die Größe der Schichtsilicat-Teilchen maximal im Bereich zwischen 10 bis 30 µm liegt und
**dass** die mittlere Teilchengröße 1 bis 20 µm beträgt.

21. Funktionselement nach Anspruch 20,
**dadurch gekennzeichnet,**
**dass** den Anteil der-Schichtsilicate in der Deckschicht (3) ≤ 50 Gew.-%, vorzugsweise 10 bis 25 Gew.-%, beträgt.

22. Funktionselement nach einem der Ansprüche 1 bis 21,
**dadurch gekennzeichnet,**
**dass** der Erweichungs- oder Schmelzpunkt des Materials der Beschichtung (2) ≥ 40°C, insbesondere ≥ 60°C beträgt.

23. Funktionselement nach einem der Ansprüche 1 bis 22,
**dadurch gekennzeichnet,**
**dass** die Deckschicht (3) einen Festschmierstoff, beispielsweise Graphit und/oder Bornitrid aufweist.

24. Funktionselement nach einem der Ansprüche 1 bis 23,
**dadurch gekennzeichnet,**
**dass** die Beschichtung (2) und die Deckschicht (3) aus dem gleichen Beschichtungsmaterial gefertigt sind.

25. Funktionselement nach einem der Ansprüche 1 bis 24,
**dadurch gekennzeichnet,**
**dass** das aus Beschichtung (2) und Deckschicht (3) bestehende Beschichtungssystem einen Flächenwiderstand ≥ 10⁹ Ω/cm² aufweist.

## Claims

1. Functional element, more particularly hob or control panel with a sheetlike substrate (1) consisting of glass or glass-ceramic, the substrate bearing an applied coating (2) comprising a crosslinked polysiloxane,
**characterized**
**in that** the coating (2) bears an applied topcoat (3) comprising a non-crosslinked polysiloxane.

2. Functional element according to Claim 1,
**characterized**
**in that** the layer thickness of the coating (2) and/or of the topcoat (3) is in the range between 10 to 50 µm.

3. Functional element according to Claim 2,
**characterized**
**in that** the layer thickness of the coating (2) and/or of the topcoat (3) is in the range between 15 to 30 µm.

4. Functional element according to any of Claims 1 to 3,
**characterized**
**in that** the total layer thickness, as the sum of the layer thicknesses of the coating (2) and of the topcoat (3), is at least 20 µm.

5. Functional element according to Claim 4,
**characterized**
**in that** the total layer thickness is in the range between 25 to 65 µm, preferably in the range between 30 to 50 µm.

6. Functional element according to any of Claims 1 to 5,
**characterized**
**in that** the coating material for the coating (2) comprises, as silicone resin, solid or liquid polysiloxanes having methyl or phenyl groups as organic radicals and hydroxy, alkoxy or vinyl radicals as functional groups.

7. Functional element according to Claim 6,
**characterized**
**in that** the fraction of the functional groups is 1% to 10% by weight and/or in that their molecular weight is 1000 to 6000 g/mol.

8. Functional element according to Claim 6 or Claim 7,
**characterized**
**in that** the coating material for the coating (2) comprises hydroxy-functional phenylpolysiloxanes having a fraction of 2% to 5% by weight of hydroxyl groups and a molecular weight of 1500 to 2000 g/mol.

9. Functional element according to any of Claims 1 to 8,
**characterized**
**in that** the fraction of the silicone resin in the crosslinked coating is in the range between 40% to 70% by weight, preferably in the range between 50% to 60% by weight.

10. Functional element according to any of Claims 1 to 9,
**characterized**
**in that** the coating (2) comprises inorganic chromatic pigments, white pigments and/or black pigments.

11. Functional element according to Claim 10,
**characterized**
**in that** the coating (2) comprises red iron oxide pigments, consisting of haematite, black iron oxide pigments, mixed-phase pigments, zinc iron brown, chromium iron brown, iron manganese black, spinel black, TiO₂ and/or ZrO₂.

12. Functional element according to any of Claims 1 to 10,
**characterized**
**in that** the coating comprises inorganic lustre pigments.

13. Functional element according to Claim 12,
**characterized**
**in that** the inorganic lustre pigments take the form of coated and/or uncoated platelet-like pigment parts.

14. Functional element according to any of Claims 10 to 13,
**characterized**
**in that** the inorganic chromatic pigments, black pigments and/or white pigments have a particle diameter of less than 20 µm, preferably of less than 10 µm.

15. Functional element according to any of Claims 1 to 13,
**characterized**
**in that** when platelet-like lustre pigments are used they have an edge length ≤ 100 µm, preferably ≤ 75 µm.

16. Functional element according to any of Claims 1 to 15,
**characterized**
**in that** the fraction of chromatic and/or black pigments and/or white pigments in the crosslinked coating (2) is in the range between 20% to 40% by weight, preferably in the range between 24% to 36% by weight.

17. Functional element according to any of Claims 1 to 16,
**characterized**
**in that** the coating (2) and/or the topcoat (3) comprise platelet-like fillers.

18. Functional element according to Claim 17,
**characterized**
**in that** the fillers consist of phyllosilicate, for example mica, kaolin and/or talc.

19. Functional element according to Claim 17 or 18,
**characterized**
**in that** the fraction of the fillers in the crosslinked coating (2) is in the range > 0% to 30% by weight, preferably > 0% to 15% by weight.

20. Functional element according to Claim 18,
**characterized**
**in that** the size of the phyllosilicate particles is at most in the range between 10 to 30 µm and
**in that** the average particle size is 1 to 20 µm.

21. Functional element according to Claim 20,
**characterized**
**in that** the fraction of the phyllosilicates in the topcoat (3) is ≤ 50% by weight, preferably 10% to 25% by weight.

22. Functional element according to any of Claims 1 to 21,
**characterized**
**in that** the softening or melting point of the material of the coating (2) is ≥ 40°C, more particularly ≥ 60°C.

23. Functional element according to any of Claims 1 to 22,
**characterized**
**in that** the topcoat (3) comprises a solid lubricant, for example graphite and/or boron nitride.

24. Functional element according to any of Claims 1 to 23,
**characterized**
**in that** the coating (2) and the topcoat (3) are fabricated from the same coating material.

25. Functional element according to any of Claims 1 to 24,
**characterized**
**in that** the coating system consisting of coating (2) and topcoat (3) has a surface resistance ≥ 10⁹ Ω/cm².

## Revendications

1. Élément fonctionnel, notamment surface de cuisson ou panneau de commande, comprenant un substrat plat (1) constitué de verre ou de vitrocéramique, un revêtement (2) qui comprend un polysiloxane réticulé étant appliqué sur le substrat,
**caractérisé en ce qu'**une couche supérieure (3) qui comprend un polysiloxane non réticulé est appliquée sur le revêtement (2).

2. Élément fonctionnel selon la revendication 1, **caractérisé en ce que** l'épaisseur de couche du revêtement (2) et/ou de la couche supérieure (3) est dans la plage allant de 10 à 50 µm.

3. Élément fonctionnel selon la revendication 2, **caractérisé en ce que** l'épaisseur de couche du revêtement (2) et/ou de la couche supérieure (3) est dans la plage allant de 15 à 30 µm.

4. Élément fonctionnel selon l'une quelconque des revendications 1 à 3, **caractérisé en ce que** l'épaisseur de couche totale constituée par la somme de l'épaisseur de couche du revêtement (2) et de la couche supérieure (3) est d'au moins 20 µm.

5. Élément fonctionnel selon la revendication 4, **caractérisé en ce que** l'épaisseur de couche totale est dans la plage allant de 25 à 65 µm, de préférence dans la plage allant de 30 à 50 µm.

6. Élément fonctionnel selon l'une quelconque des revendications 1 à 5, **caractérisé en ce que** le matériau de revêtement pour le revêtement (2) comprend en tant que résine de silicone des polysiloxanes solides ou liquides comprenant des groupes méthyle ou phényle en tant que radicaux organiques et des radicaux hydroxy, alcoxy ou vinyle en tant que groupes fonctionnels.

7. Élément fonctionnel selon la revendication 6, **caractérisé en ce que** la proportion des groupes fonctionnels est de 1 à 10% en poids et/ou **en ce que** leur poids moléculaire est de 1 000 à 6 000 g/mol.

8. Élément fonctionnel selon la revendication 6 ou 7, **caractérisé en ce que** le matériau de revêtement pour le revêtement (2) comprend des phénylpolysiloxanes à fonction hydroxy comprenant une proportion de 2 à 5% en poids de groupes hydroxy et ayant un poids moléculaire de 1 500 à 2 000 g/mol.

9. Élément fonctionnel selon l'une quelconque des revendications 1 à 8, **caractérisé en ce que** la proportion de la résine de silicone dans le revêtement réticulé est dans la plage allant de 40 à 70% en poids, de préférence dans la plage allant de 50 à 60% en poids.

10. Élément fonctionnel selon l'une quelconque des revendications 1 à 9, **caractérisé en ce que** le revêtement (2) contient des pigments colorés inorganiques, des pigments blancs et/ou des pigments noirs.

11. Élément fonctionnel selon la revendication 10, **caractérisé en ce que** le revêtement (2) comprend des pigments de rouge d'oxyde de fer, constitués par de l'hématite, des pigments de noir d'oxyde de fer, des pigments à phases mixtes, du brun de zinc et de fer, du brun de chrome et de fer, du noir de fer et de manganèse, du noir de spinelle, TiO₂ et/ou ZrO₂.

12. Élément fonctionnel selon l'une quelconque des revendications 1 à 10, **caractérisé en ce que** le revêtement comprend des pigments brillants inorganiques.

13. Élément fonctionnel selon la revendication 12, **caractérisé en ce que** les pigments brillants inorganiques sont configurés sous la forme de particules pigmentaires en forme de plaquettes revêtues et/ou non revêtues.

14. Élément fonctionnel selon l'une quelconque des revendications 10 à 13, **caractérisé en ce que** les pigments colorés inorganiques, les pigments noirs et/ou les pigments blancs présentent un diamètre de particule inférieur à 20 µm, de préférence inférieur à 10 µm.

15. Élément fonctionnel selon l'une quelconque des revendications 1 à 13, **caractérisé en ce que** lors de l'utilisation de pigments brillants en forme de plaquettes, ceux-ci présentent une longueur de bord ≤ 100 µm, de préférence ≤ 75 µm.

16. Élément fonctionnel selon l'une quelconque des revendications 1 à 15, **caractérisé en ce que** la proportion de pigments colorés et/ou noirs et/ou de pigments blancs dans le revêtement réticulé (2) est dans la plage allant de 20 à 40% en poids, de préférence dans la plage allant de 24 à 36% en poids.

17. Élément fonctionnel selon l'une quelconque des revendications 1 à 16, **caractérisé en ce que** le revêtement (2) et/ou la couche supérieure (3) comprennent des charges en forme de plaquettes.

18. Élément fonctionnel selon la revendication 17, **caractérisé en ce que** les charges sont constituées de silicate en feuillets, par exemple de mica, de kaolin et/ou de talc.

19. Élément fonctionnel selon la revendication 17 ou 18, **caractérisé en ce que** la proportion des charges dans le revêtement réticulé (2) est dans la plage allant de > 0 à 30% en poids, de préférence de > 0 à 15% en poids.

20. Élément fonctionnel selon la revendication 18, **caractérisé en ce que** la taille des particules de silicate en feuillets est au plus dans la plage allant de 10 à 30 µm, et **en ce que** la taille de particule moyenne est de 1 à 20 µm.

21. Élément fonctionnel selon la revendication 20, **caractérisé en ce que** la proportion des silicates en feuillets dans la couche supérieure (3) est ≤ 50% en poids, de préférence de 10 à 25% en poids.

22. Élément fonctionnel selon l'une quelconque des revendications 1 à 21, **caractérisé en ce que** le point de ramollissement ou de fusion du matériau du revêtement (2) est ≥ 40 °C, notamment ≥ 60 °C.

23. Élément fonctionnel selon l'une quelconque des revendications 1 à 22, **caractérisé en ce que** la couche supérieure (3) comprend un lubrifiant solide, par exemple du graphite et/ou du nitrure de bore.

24. Élément fonctionnel selon l'une quelconque des revendications 1 à 23, **caractérisé en ce que** le revêtement (2) et la couche supérieure (3) sont fabriqués à partir du même matériau de revêtement.

25. Élément fonctionnel selon l'une quelconque des revendications 1 à 24, **caractérisé en ce que** le système de revêtement constitué du revêtement (2) et de la couche supérieure (3) présente une résistance superficielle ≥ 10⁹ Ω/cm².
